# EUROPEAN PATENT APPLICATION

(11) **EP 0 902 057 A2**
(43) Date of publication of application: **17.03.1999**
(21) Application number: 98117026.9
(22) Date of filing: 09.09.1998
(51) Int. Cl.: C08L 83/04, C08J 3/20

(54) **Method for continuous manufacture of a silicone rubber composition**

(30) Priority: 11.09.1997 JP 264970/97
(71) Applicant: Dow Corning Toray Silicone Company, Ltd., Chiyoda-ku, Tokyo 100-0005 (JP)
(72) Inventor: Hamada, Mitsuo, Main Office for Research and Dev., Ichihara-shi, Chiba Prefecture (JP); Kinoshita, Tomoo, Main Office for Research and Dev, Ichihara-shi, Chiba Prefecture (JP); Kunimatsu, Kaoru, Main Office for Research and Dev, Ichihara-shi, Chiba Prefecture (JP)
(74) Representative: Patentanwälte Sternagel & Fleischer

(57) **Abstract**

The present invention provides a method for continuous manufacturing of a silicone rubber base composition which does not require the use of a dual-screw kneader-extruder with a large length to diameter ratio. Moreover our invention allows the use of such inorganic fillers as diatomaceous earth, quartz or a similar large-grain and hard powder without abrasive wear of the screws and cylinders. Additionally, our method does not cause blackening of the silicone rubber base composition, and does not cause production problems even when fumed silica, sedimentary silica, or a similar reinforcing silica are used in large quantities. Furthermore, our invention provides continuous manufacturing of a silicone rubber base composition without the need for heat treatment of said composition inside the dual-screw kneader-extruder.

## Description

The present invention is a method for continuous manufacture of a silicone rubber base composition suitable for rolling. This invention refers also to a silicone rubber base composition obtainable from this method.

In mixing silicone rubber compositions, it is common practice in the art to first form a silicone rubber base composition consisting of polydiorganosiloxane gum and inorganic filler as main components. If necessary, various additives are also mixed into the base composition. This base can then be formed into a silicone rubber molded product by mixing it with an organic peroxide or polyorganohydrogensiloxane and a platinum catalyst, and then heating the mixture. Typically, the silicone rubber base composition has been produced by mixing the starting components in a combined kneader-extruder, an internal mixer, or other rotary-type mixer. However, mixers of these types have low capacity and are unsuitable for mass production or continuous processing. It has been proposed, as described in JP-A 2-102007, first to turn a polydiorganosiloxane gum, an inorganic filler, and auxiliary agents into a powder, and to then continuously mix these components by passing them through a co-rotating dual-screw unidirectional rotary kneaderextruder. In particular, JP-A 6-313046 describes a process in which a polydiorganosiloxane gum, an inorganic filler, and auxiliary agents are continuously mixed in such a dual-screw and then the mixture is again mixed under heating conditions.

The continuous manufacturing processes of the above references require the use of a dual-screw kneader-extruder with a large length to diameter ratio. Furthermore, inorganic filler materials suitable for the process are limited to the use of such substances as fumed silica, sedimentary silica, or similar reinforcing silica which does not create operating problems for the process. The use of an inorganic filler which has higher hardness or grain size, such as a diatomaceous earth or a quartz, lead to abrasive wear on the surfaces of the screws and cylinders of the aforementioned dual-screw Kneader-extruders. This results not only in the blackening of the silicone rubber base composition during mixing, but also gradually in the decrease of the effect of kneading. Furthermore, in order to decrease temporal creep hardening of said silicone rubber base composition, the conventional process requires that the material inside the dual-screw kneader-extruder be subjected to heat treatment, leading to an increase in energy consumption.

The present invention provides a method for continuous manufacturing of a silicone rubber base composition which does not require the use of a dual-screw kneader-extruder with a large length to diameter ratio. Moreover our invention allows the use of such inorganic fillers as diatomaceous earth, quartz or a similar large-grain and hard powder without abrasive wear of the screws and cylinders. Additionally, our method does not cause blackening of the silicone rubber base composition, and does not cause production problems even when fumed silica, sedimentary silica, or a similar reinforcing silica are used in large quantities. Furthermore, our invention provides continuous manufacturing of a silicone rubber base composition without the need for heat treatment of said composition inside the dual-screw kneader-extruder.
Fig. 1 is a sectional view of a metering feeder and a multiple-stage sliding shear-type single-screw extruder 11 used in accordance with the present invention.
Fig. 2 is a sectional view of a multiple-stage, sliding shear-type singlescrew extruder 11 used in accordance with one practical example of the present invention.
Fig. 3 is face view of disk 3 which is fixed to extruding screw 1 of a multiple-stage, sliding shear-type single-screw extruder 11.
Fig. 4 is a face view of circular projection 4 extending from the inner peripheral surface of cylinder 2 in a multiple-stage, sliding shear-type single-screw extruder 11.

### Reference Numerals Used in the Specification and Drawings

- 1: Extruding screw
- 2: Cylinder
- 3: Disk
- 3a: Facing surface of disk
- 4: Circular projection
- 4a: Facing surface of circular projection
- 5: Starting-material feed opening
- 6: Discharge opening
- 7: Helical blade of extruding screw 1
- 8: Filter
- 9: Outlet nozzle
- 10: Metering feeder
- 11: Multiple-stage, sliding shear-type single-screw extruder
- 31: Recesses on facing surfaces 3a
- 32: Projections on facing surfaces 3a
- 41: Recesses on facing surfaces 4a
- 42: Projections on facing surfaces 4a
- M: Motor

The present invention is a method for manufacturing a silicone rubber base composition, comprising: (A) forming a freely-flowable powdered silicone rubber composition comprising (a) a cross-linkable polydiorganosiloxane with a viscosity of at least 1 x 10⁵ mPa·s at 25°C and (b) an inorganic filler, and (B) continuously kneading and massing said silicone rubber base composition in a multiple-stage, sliding shear type single-screw extruder.

The aforementioned extruder consists of a cylinder with a starting-material feed opening at one end and a discharge opening at the other end with an extruding screw inserted into said cylinder. The extruding screw has a plurality of disks attached to the screw in a position perpendicular to said screw. A plurality of circular projections extend from the inner periphery of the cylinder and are arranged in the axial direction of the screw. The disks are rotationally installed between the circular projections. Facing surfaces of the disks and the circular projections have radially-extending projections and recesses.

The cross-linkable polydiorganosiloxane, component (a) of the present invention is a conventional linear polydiorganosiloxane which contains in one molecule two or more than two alkenyl groups, preferably C₂-C₆ alkenyl groups for example vinyl groups. Since the powdered silicone rubber base composition is not easily obtained when the viscosity is low, it is recommended that the viscosity at 25°C be greater than 1x10⁵ mPa·s and preferably within a range of 1x10⁶ mPa·s to 1x10⁸ mPa·s. Polydiorganosiloxanes of this type are known and commercially produced. A typical example is a linear polymer represented by the following general formula: R¹(R₂SiO)_{*n*}SiR₂R¹, where R is a non-substituted or substituted monovalent hydrocarbon group which contains 0 to 0.1% of alkenyl groups preferably vinyl groups, R¹ is a non-substituted or substituted monovalent hydrocarbon group or a hydroxyl group, and *n* is between 1,000 and 10,000. In this formula R is selected preferably from an alkyl such as a methyl group, an aryl group such as a phenyl group, an alkenyl group such as a vinyl group, and a substituted alkyl group such as a 3,3,3-trifluoropropyl group. Examples of R¹ are methyl, vinyl, phenyl, and hydroxyl. In the molecule, the alkenyl group may exist only at both terminals, in a side chain, or at both positions simultaneously . Component (a) may also contain some branches.

The inorganic filler, component (b) of the present invention may be any filler suitable for use with a silicone rubber base composition. Such filler may be represented by a fumed or dried silica, wet process or sedimentary silica, or a similar reinforcing silica having a BET surface area greater than 50 m²/g. The surface of said silica may have been subjected to hydrophobic treatment with an organic silicon compound (e.g., dimethyldichlorosilane, trimethylchlorosilane or hexamethyldisilazane), Other filler examples are diatomaceous earth , quartz, powdered aluminum hydroxide, powdered aluminum oxide, powdered magnesium oxide, powdered calcium carbonate, or similar extending fillers. The filler of each type can be used individually or in combination of two or more. There are no special limitations with regard to the quantity of component (b) used in our process, provided this quantity is sufficient to mass component (a). However, the best results are obtained when component (b) is used in an amount of 5 to 200 parts by weight, preferably 10 to 150 parts by weight per 100 parts by weight of component (a).

Component (b) is added to component (a), and if component (b) is an untreated reinforcing silica (to improve its dispersion during kneading, to reduce creep hardening and to adjust plasticity after kneading), the mixture may be combined with an optional plasticizer (c), such as dimethyldimethoxysilane, trimethylhydroxysilane, diphenylsilanediol, and dimethylpolysiloxane of low degree of polymerization with a terminal silanol. It is recommended that component (c) is used in an amount of 0.5 to 40 parts by weight per 100 part by weight of reinforcing silica. If necessary, the silicone rubber base composition can be combined with other conventional additives such as silicone-resin type reinforcing agents, heat-retardants, combustion-retardants, adhesion-promoters, dyes, mold-release agents and processing aids.

In the method of the present invention, a freely flowable powdered silicone rubber base composition is prepared first. Components (a) and (b), and optionally component (c), are loaded into a rotary mixer with high speed mixing blades, such as a Henschel™ mixer. Then, the mixture is turned into a powder by shearing while being heated to a temperature of 100 to 200°C.

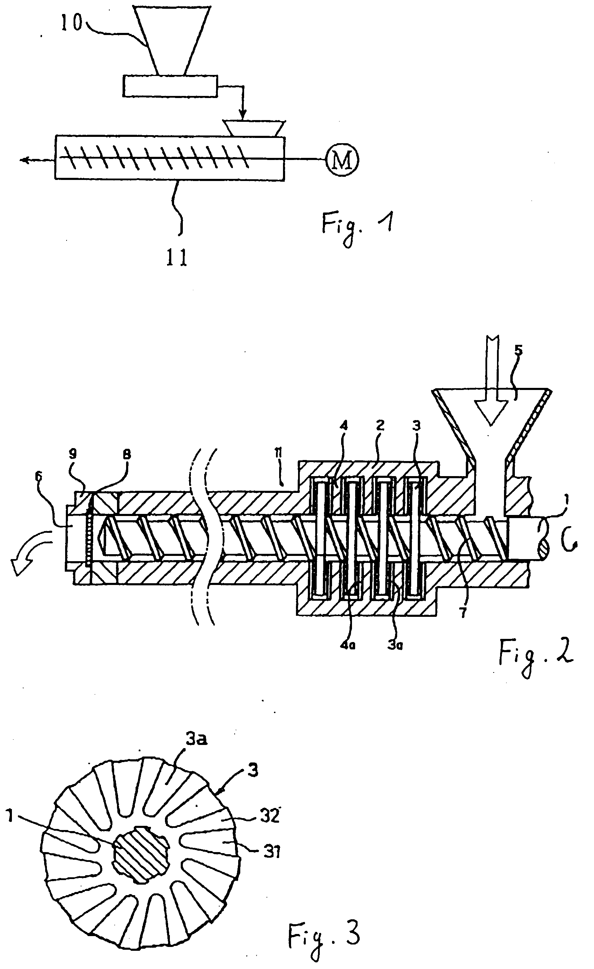

The resulting silicone rubber base composition is loaded via a metering feeder 10 into a multiple-stage, sliding shear-type single-screw extruder 11 as shown in Fig. 1, and the composition is then kneaded for massing.

As shown in Fig. 2, said multiple-stage extruder 11 consists of a cylinder 2 with a starting-material feed opening 5 at one end and an discharge opening 6 at the other end with an extruding screw 1 inserted into said cylinder 2. Extruding screw 1 is connected to a motor, designated in Fig. 1 as M. Extruding screw 1 has a plurality of disks 3 attached to it in positions perpendicular to the screw. A plurality of circular projections 4 extend from the inner periphery of cylinder 2. These projections are arranged in the axial direction of screw 1. Disks 3 are rotatably installed between circular projections 4. Facing surfaces 3a of disks 3 and facing surfaces 4a of circular projections 4 have radially-extending recesses and projections 31, 32 and 41, 42, respectively.

Facing surfaces 3a of disks 3 and facing surfaces 4a of circular projections 4 are not in contact with each other. Similarly, the outer peripheral surfaces of said disks the and inner peripheral surfaces of cylinder 2 do not have physical contact. The inner peripheral surfaces of circular projections 4 and the outer peripheral surface of extruding screw 1 also do not have contact. Thus, the mixture of the silicone rubber base composition passes through the gaps between aforementioned parts.

Extruding screw 1 has a helical blade 7 attached to its outer surface as shown in Fig. 2. When the screw rotates, helical blade 7 conveys the powdered silicone rubber composition, which is supplied via a starting material feed opening 5, in the axial direction of the screw along the space between disks 3 and circular projections 4.

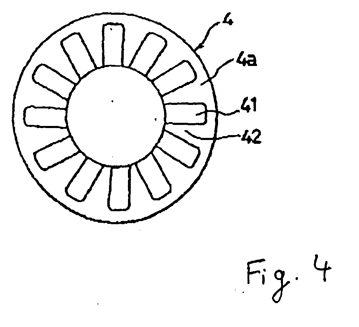

Radially-extending recesses 31 and projections 32 on surfaces 3a of disks 3, shown in Fig. 3. and radially-extending recesses 41, and projections 42 on surfaces 4a of circular projections 4, shown in Fig. 4, impart to the powdered silicone rubber base composition a shearing force. As the freely flowable powdered silicone rubber base composition passes sequentially between disks 3 and circular projections 4, it experiences the effect of repeating shearing actions, whereby this material is conventionally massed. The resulting uniformly mixed silicone rubber base composition is next passed via a filter 8, through outlet nozzle 9, and is unloaded through discharge opening 6. It is recommended that the gap between disks 3 and circular projections 4 be within the range of 0.3 to 3 mm.

Multiple-stage sliding shear type single-screw extruder 11, shown in Fig. 2, has four disks 3 and three circular projections 4 . If necessary, however, the number of disks and projections can vary from 2 to 10. Furthermore, metering feeder 10 continuously supplies dosed quantities of the powdered silicone rubber base composition to said multiple-stage extruder. However, other types of feeder which are similar in function can also be employed for this purpose.

### Examples

In these examples, the quantities are indicated in parts by weight, and all viscosities are indicated at 25°C. Plasticity of the silicone rubber base compositions was measured according to JIS K6300. Suitability for rolling was measured by repeatedly passing the material between two rollers. Physical properties of a silicone rubber sheet were measured in compliance with the requirements of JIS K6301.

Suitability for rolling under industrial conditions was evaluated as follows: the silicone rubber composition dose not pass the test if after passing between calendar rolls said composition does not wind onto the roll and merely falls down; the results are positive if after passing between calendar rolls the composition is easily wound onto the roll and does not fall.

### Practical Example1

A mixture was prepared of the following components: 100 parts of a dimethylsiloxane-methylvinylsiloxane copolymer gum (containing 0.2 mole % of methylvinylsiloxane units) with both molecular chain terminals blocked with trimethylsiloxy groups, the viscosity being 15x10⁶ mPa·s; 50 parts of fumed silica having a BET surface area of 200 m²/g; 90 parts of powdered diatomaceous earth with a 5µm average grain diameter; and 12 parts of polydimethylsiloxane of 50 mPa·s viscosity with silanol groups on both molecular terminals. The mixture was then loaded into a Henschel™ mixer, heated to 150°C, and was mixed for 10 min with 1,000 rpm of the rotating blade. As a result, a freely-flowable powdered silicone rubber base composition was obtained.

This composition was next loaded into a metering feeder 10 as shown in Fig. 1, and then was supplied with a rate of 20 kg/hr into starting-material feed opening 5 of multiple-stage sliding shear-type single-screw extruder 11. The distance between starting-material feed 5 and discharge 6 openings of said extruder 11 was equal to 1,500 mm. Extruding screw 1 had a diameter of 65 mm. The screw rotated with a speed of 50 rpm. A feed screw (not shown in the drawings) parallel to extruding screw 1 was installed directly beneath the starting-material feed opening 5. Disks 3 and circular projections 4 had a diameter of 140 mm. A gap between disks 3 and the circular projections 4 was equal to 0.5 mm. The gaps between extruding screw 1 and the inner surface of cylinder 2, between disks 3 and the inner surface of cylinder 2, and between circular projections 4 and extruding screw 1 were all equal to 1.0 mm. The surfaces of the extruder in contact with the silicone rubber base composition were made of a wear-resistant steel. The powdered silicone rubber base composition was kneaded in the aforementioned extruder and was unloaded through discharge opening 6 of said extruder as a uniform silicone rubber base composition. The color of the obtained silicone-rubber composition was observed, its plasticity was measured, and its suitability for treatment with calendar rollers was tested. The results are shown in Table 1. One hundred (100) parts of the produced silicone rubber base composition were combined with 0.5 parts of 2,5-dimethyl-2,5-di(t-butylperoxy) hexane. The mixture was uniformly mixed between two rolls, and, as a result, a catalyzed silicone rubber composition was prepared. This silicone rubber composition was formed into a 2 mm-thick silicone-rubber sheet by pressure molding for 10 min. at a temperature of 170°C. Physical properties of the aforementioned sheet were measured. The results are also reported in Table 1.

### Comparative Example 1

A second silicone rubber base composition was prepared as in Practical Example 1. However, instead of first making a freely-flowable powdered silicone rubber base composition, the ingredients were loaded directly into starting-material feed opening 5 of the extruder 11. The components were then treated under the same conditions as in Practical Example 1. The color of the obtained silicone rubber base composition was observed, its plasticity was measured, and its suitability for treatment with calendar rolls was tested. The results are shown in Table 1. The product silicone rubber composition was formed into a sheet and cured under the same conditions as in Practical Example 1. The physical properties of the sheet were also measured with results reported in Table 1.

### Comparative Example 2

A third silicone rubber base composition was prepared as in Practical Example 1. However, instead of using the multiple-stage extruder 11 of Practical Example 1, the resulting powdered silicone rubber base composition was loaded into the feed opening 5 of a dual-screw kneader-extruder having two rotating screws turning in the same direction. The extruder had 50 mm screw diameters, an length to diameter (L/D) ratio of 40, a 0.25 mm gap between the extruding screws and the inner surfaces of the cylinder. The extruding screws rotated with a speed of 300 rpm. The surfaces in contact with the silicone rubber base composition were also made of a wear-resistant steel. The material was continuously fed with a rate of 20 kg/h. The color of the obtained silicone rubber base composition was observed, its plasticity was measured, and its suitability for treatment with calendar rolls was tested. The results are shown in Table 1. The product silicone rubber composition was formed into a sheet and cured under the same conditions as in Practical Example 1. The physical properties of the sheet were measured with the results given in Table 1.

**Table 1**

| | | Practical Example | Comparative Example 1 | Comparative Example 2 |
|---|---|---|---|---|
| Appearance (color) | | White | White | Black-Ash |
| Suitability for Rolling | | Suitable | Unsuitable | Unsuitable |
| PlastiCity | Directly after preparation (mm x 100) | 330 | 370 | 360 |
| | After 1 month retaining (mm x 100) | 450 | 600 | 580 |
| Hardness (Type A) | | 73 | 78 | 71 |
| Tensile strength (kgf/cm²) | | 83 | 60 | 7 |
| Relative elongation (%) | | 400 | 280 | 380 |
| Tearing strength (kgf/cm) | | 13 | 7 | 10 |

### Practical Example 2

A silicone rubber base composition was prepared by the same manner as in Practical Example 1, with the exception that the composition contained 70 parts of fumed silica with a 200 m²/g specific surface area and 25 parts of polydimethylsiloxane having silanol on both terminals. Other conditions were the same as in Practical Example 1. The obtained silicone rubber base composition was of a semi-transparent, milky color. It had good suitability for rolling under industrial conditions.

### Comparative Example 3

A silicone rubber base composition was prepared from the same powdered silicone rubber composition as in Practical Example 2. The silicone rubber base composition was then kneaded in a dual-screw kneaderextruder having two screws rotating in the same direction, as in Comparative Example 2. The obtained silicone rubber composition was of a semi transparent white-ash color.

## Claims

1. A method for manufacture of a silicone rubber base composition, comprising:
(A) preparing a freely flowable powdered silicone rubber base composition comprising
(a) a cross-linkable polydiorganosiloxane with a viscosity of at least 1 x 10⁵ mPa·s at 25°C and
(b) an inorganic filler, and
(B) continuously kneading and massing the powdered silicone rubber composition in a multiple-stage, sliding shear-type, single screw extruder.

2. The method of claim 1, wherein said freely-flowable powdered silicone rubber composition is produced by mechanically shearing at a high speed the cross-linkable polydiorganosiloxane and the inorganic filler.

3. The method of Claim 2, wherein said high-speed mechanical shearing is carried out at a temperature of 100 to 200°C.

4. The method of any of the preceding claims , wherein the cross-linked polydiorganosiloxane is a polydiorganosiloxane which contains vinyl groups.

5. The method of any of the preceding claims, wherein the inorganic filler is selected from the group consisting of reinforcing silica filler, diatomaceous earth, quartz, powdered aluminum hydroxide, powdered aluminum oxide, powdered magnesium oxide, powdered calcium carbonate and mixtures thereof.

6. The method of claim 5 wherein the inorganic filler is reinforcing silica and the freely flowable, powdered silicone rubber base composition further comprises (c) 0.5 to 40 parts by weight of a plasticizer for each 100 parts by weight of reinforcing silica.

7. The method of Claim 6 wherein the plasticizer is selected from the group consisting of dimethyldimethoxysilane, trimethylhydroxysilane, diphenysilanediol, and silanol-terminated polydimethylsiloxane.

8. The method of any of the preceding claims, wherein said multiple-stage shear type single-screw extruder comprises:
a cylinder (2) with a starting-material feed opening (5) at one end and a discharge opening (6) at the other end;
an extruding screw (1) inserted into said cylinder (2), said extruding screw (1) having a plurality of disks (3) attached to said screw (1) in a position perpendicular to said screw (1); and
a plurality of circular projections (4) extending from the inner periphery of said cylinder (2) and being arranged in the axial direction of said screw (1), said disks (3) being rotatably installed between said circular projections (4), facing surfaces of said disks (3a) and said circular projections (4) having radially-extending projections (31, 32) and recesses (41, 42).

9. A silicone rubber base composition obtainable by a process of any of claims 1-8.
